# EUROPÄISCHE PATENTANMELDUNG

(11) **EP 2 743 076 A1**
(43) Veröffentlichungstag der Anmeldung: **18.06.2014**
(21) Anmeldenummer: 13005708.6
(22) Anmeldetag: 09.12.2013
(51) Int. Cl.: B32B 5/02, B32B 3/02, B32B 3/08, B32B 3/26, B32B 3/30, B29C 70/54, F21V 33/00

(54) **Bauteil mit Faserverbundwerkstoff**

(30) Priorität: 12.12.2012 DE 102012024294
(71) Anmelder: Oechsler Aktiengesellschaft, 91522 Ansbach (DE)
(72) Erfinder: Schmidt, André, D - 91522 Ansbach (DE); Wacker, Marco, D - 91452 Wilhermsdorf (DE)
(74) Vertreter: Führing, Dieter

(57) **Zusammenfassung**

Ein Bauteil mit Faserverbundwerkstoff (11) weist, hinter sichtseitigen Abstrahlbereichen (16), sichtabgewandt wenigstens eine Aussparung (17) in einer rückwärtigen lichtundurchlässigen Beschichtung (15) oder / und wenigstens eine Einsenkung (18) in das rückwärtige Laminat (14) der Matrix auf. Einsenkungen (18) können kanalartige Verläufe und / oder unterschiedlich geneigte Berandungen aufweisen. Einsenkungen (18) können von wenigstens einer intensitäts- oder farbumsteuerbaren Lichtquelle (19) in abgeschotteten Lichtkammern (20) hinterleuchtet werden. Lichtquellen (19) können an Kapazitäts-Auswerteschaltungen (22) mit Elektroden (21) angeschlossen sein, die hinter Abstrahlbereichen (16) und vorzugsweise in Einsenkungen (18) angeordnet sind.

## Beschreibung

Ein in der DE 10 2009 019 495 A1 näher beschriebenes Bauteil besteht im Wesentlichen aus einem unter Wärme- und Druckeinwirkung verformten Faserverbundwerkstoff, dem so genannten Organoblech. Bei dem handelt es sich um ein ein- oder mehrlagiges Fasergebilde, das, in der Regel beidseitig, in eine Matrix aus thermoplastischem Laminat eingefasst wird. Die sichtabgewandte Rückseite eines Faserverbundwerkstoffes ist gewöhnlich etwa durch eine Folie oder einen Lackauftrag als lichtundurchlässiger Beschichtung kaschiert. Im Wesentlichen in Richtung der zu erwartenden mechanischen Beanspruchung orientierte Fasererstreckungen verleihen dem Bauteil trotz geringer Wandstärke und bei geringem Gewicht hervorragende Festigkeitseigenschaften. Daraus erstellte Bauteile sind biegesteif und schlagfest. Selbst flache bis flach gewölbte Gehäuseschalen sind außerordentlich biege- und verwindungssteif. Die Matrix der Laminierung durchprägende oder durchschimmernde Strukturen etwa gewebter oder gewirkter Faserverläufe vermitteln dem Bauteil eine besondere Haptik und ein, zumal wenn es sich um carbonfarbige Fasern zwischen farblosem oder hellem Laminat handelt, nobles Aussehen. Durch Einweben von Carbon- oder anderen elektrisch leitenden Fasern lassen sich örtlich gezielt elektrothermische oder elektromagnetische (etwa Antennen- oder Abschirm-)Effekte verwirklichen und selbst Schaltungen verdrahten.

In der nicht vorveröffentlichten deutschen Patentanmeldung 10 2011 115 803.4 wird vorgeschlagen, für frontseitige lokale Abstrahlung einer Hinterleuchtung am Faserverbundwerkstoff eine rückwärtige Ausfräsung und gegebenenfalls deren Auffüllen mit lichtleitendem Kunststoff vorzusehen.

Vorliegender Erfindung liegt die technische Problemstellung zugrunde, das Einsatzszenario der schon vielseitig nutzbaren faserverstärkten Bauteile, nun aber auch ohne Beschränkung hinsichtlich thermo- oder duroplastischen Materiales oder hinsichtlich Faserarten, -anordnungen oder -längen, in Hinblick auf insbesondere lichttechnische Eigenschaften und Anwendungen weiterzubilden.

Das wird nicht dadurch erreicht, dass gemäß der DE 10 2010 039 270 A1 in eine massive geschäumte Kunststoffschicht sicht- und abstrahlseitig Leuchtfolien und gegebenenfalls Berührungssensoren eingesenkt und von Öffnungen in einer auf der Kunststoffschicht gelegenen, etwa metallenen Dekorlage randseitig übergriffen sind, mit konstruktiver Versteifung durch eine der Kunststoffschicht hinterlegte, dagegen dünne Funktionslage aus Faserverbundhalbzeug. Eine derartige Schichtenanordnung aus zwischen durchbrochener Dekorlage und undurchbrochener Funktionslage eingespritztem und aufgeschäumtem Kunststoff ist nicht von Umlicht oder Lichtquellen für geometrisch definierte, dekorative oder informative Abstrahlung hinterleuchtbar.

Die Aufgabe ist dagegen erfindungsgemäß durch die im Hauptanspruch angegebenen wesentlichen Merkmale gelöst. Durch lokales Aussparen der Lackschicht oder dergleichen lichtundurchlässiger Beschichtung auf rückwärtigem Laminat einer Faserverbund-Matrix und lokales Einfräsen in dieses rückwärtige Laminat, zumal bis etwa in die Ebene der Lage der Faserstrukturen hinein, wird einem an sich allenfalls nur diffus durchschimmernden Faserverbund-Bauteil sichtseitig lokal eine dezidierte dekorative oder informative Wirkung verliehen. Die kann etwa statisch ein Schmuckmuster beziehungsweise ein Firmenlogo oder dynamisch eine betriebstechnische Information zum Inhalt haben und auch zum Auslösen von Schaltfunktionen weitergebildet werden.

Örtlich, statt quer zur Faserebene orientierte Berandungen, dagegen geneigte oder im Querschnitt etwa konkav geschwungen verlaufende Seitenwände führen lokal gezielt zu entsprechend weniger kontrastreich begrenzter Durchstrahlung und ermöglichen so zusätzliche visuelle Unterscheidungskriterien.

Die Wirkung tritt sichtseitig schon aufgrund bloßer rückwärtiger Umgebungshelligkeit in Erscheinung. Prägnanter wird sie noch im aktiven Betrieb, also wenn das Bauteil rückwärtig bestrahlt wird; sowie informativer, wenn in unterschiedliche, gegeneinander abgeschottete Bereiche derartiger rückwärtiger Materialeingriffe gezielt unter Einschalten und Abschalten oder Farbwechsel von entsprechend regional begrenzten Hinterleuchtungen eingestrahlt wird.

Wenn ein passiv durchschimmernder oder gar aktiv lichtabstrahlender Bereich rückwärtig mit einer lichtdurchlässigen Elektrode hinterlegt ist, dann kann dieser Aktionsbereich gezielt für Schalterfunktion eingesetzt werden. Denn bei dichter Annäherung etwa einer Fingerkuppe an diesen Bereich der Front- und Sichtseite des Verbundwerkstoffes mit seiner als Dielektrikum wirkenden Matrix ändert sich die wirksame Kapazität, was mit einer Resonanz- oder sonstigen Auswerteschaltung etwa als Bestätigung einer oder Aufforderung zu einer Schalterbetätigung zum Auslösen von Schaltungsfunktionen ausgewertet werden kann. Unterschiedliche Symbole oder sonstige Geometrien solcher Bereiche lassen derartige Funktionen problemlos gegeneinander differenzieren. Eine solche Elektrode kann hinter dem rückwärtigen Laminat etwa im Bereiche einer Lack-Aussparung angeordnet sein. Empfindlicher ist die Reaktion in Form der Kapazitätsänderung jedoch, wenn die Elektrode rückwärtig auf den Grund einer Einsenkung in die Matrix eingelassen ist, um den Abstand zum frontseitigen Abstrahl- und Aktionsbereich zu verringern.

Grundsätzlich können Einfräsungen oder dergleichen Einsenkungen auch in das sichtseitige, vordere Laminat der Faserverbund-Matrix vorgenommen werden. Zum Vermeiden von Verschmutzungen sollten die dann jedoch mit lichtdurchlässig aushärtendem Material aufgefüllt oder abgedeckt werden; was allerdings das Aussehen und die Haptik dieser Oberfläche beeinträchtigen könnte. Sofern das Bauteil sichtseitig mit einer oberflächenrauen Lackschicht oder Folie belegt ist, wird die zweckmäßigerweise im Abstrahlbereich lokal entfernt, um hierdurch eine scharfkantiger berandete Abstrahlung zu erzielen. Wenn dann bei Hinterleuchtung die Faserstruktur in der Matrix eines Organobleches oder dergleichen Faserverbundwerkstoffes in diesem Abstrahlbereich durchschimmert, kann das als besonderes Designmerkmal gelten.

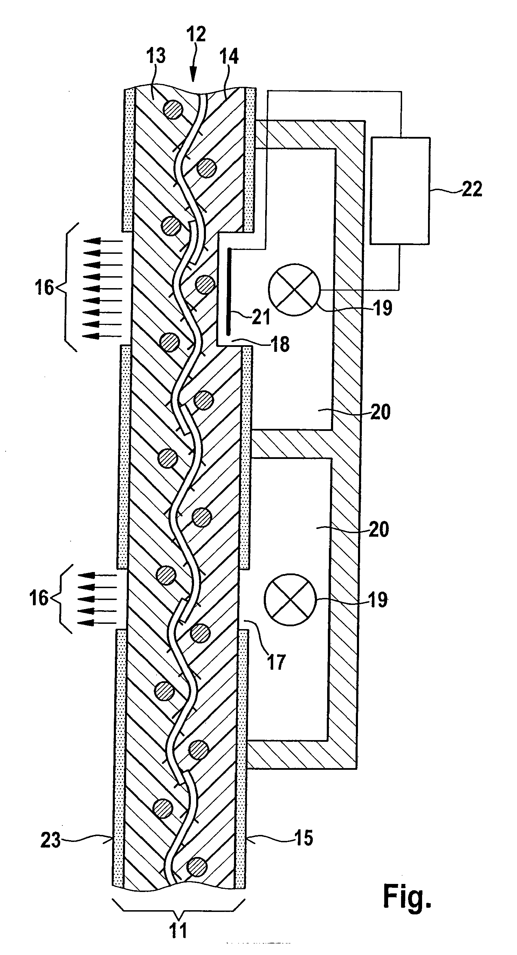

Zusätzliche Weiterbildungen der Erfindung und deren Abwandlungen ergeben sich aus den weiteren Ansprüchen und, auch hinsichtlich deren Vorteilen, aus nachstehender Beschreibung einer in der Zeichnung unmaßstäblich vergrößert auf das Funktionswesentliche abstrahiert skizzierten bevorzugten Realisierung der Erfindung.

Die einzige Figur der Zeichnung zeigt in abgebrochener Schnittsdarstellung ein Bauteil mit einem als Organoblech bezeichneten, lokal durchstrahlbaren Faserverbundwerkstoff 11. Der besteht im Wesentlichen aus wenigstens einer beispielsweise verwebten, lang- und / oder kurzfädrigen Faserlage 12, die durch beidseitiges Verpressen zwischen, gewöhnlich thermoplastischen, Laminaten 13, 14 kunststoffgetränkt und in diese Matrix eingelagert worden ist. Ein solcher Faserverbundwerkstoff 11 ist, wenn überhaupt, allenfalls diffus durchstrahlbar und deshalb nicht als leuchtender Informations- oder Dekorträger - etwa zusätzlich zu seiner eigentlichen Bauteilfunktion - einsetzbar. Zumeist ist der Faserverbundwerkstoff 11 ohnehin rückwärtig mit einem undurchsichtigen Lack oder dergleichen Beschichtung 15 ausgestattet.

Um dennoch auf dem vorderen Laminat 13 geometrisch definierte lokale Abstrahlbereiche 16 zu erzielen, sind rückwärtig entsprechend geometrisch begrenzte Aussparungen 17 in die Beschichtung 15 beziehungsweise Einfräsungen oder dergleichen Einsenkungen 18 in das rückwärtige Laminat 14 eingebracht. Falls der Faserverbundwerkstoff 11 sichtseitig, also auf dem vorderen Laminat 13 seiner Matrix, mit einer streureflektierenden Raubeschichtung 23 belegt ist, wird diese, im Interesse kontrastreicher Berandung des mit der Aussparung 17 beziehungsweise Einfräsung 18 gewöhnlich koaxialen aber nicht zwingend deckungsgleichen Abstrahlbereiches 16, zweckmäßigerweise lokal entfernt.

Eine rückwärtige lichtundurchlässige Beschichtung 15 kann mittels Laserenergie etwa zur Darstellung von Beschriftungen oder Ornamenten gezielt entfernt werden. Einsenkungen 18 können für unterschiedlich hell abstrahlende Bereiche 16 unterschiedlich tief gehen und sich bis in den Bereich der Faserlage 12 erstrecken. Bei einem wie skizziert einlagigen Faserverbundwerkstoff 11 wird die Faserlage 12 aber im Interesse der mechanischen Stabilität möglichst nicht angegriffen, die Einsenkung 18 also auf maximal die Materialstärke des rückwärtigen Laminates 14 der Fasermatrix beschränkt. Etwa mittels eines Fingerfräsers ausgeführt, können selbst die rückwärtigen Einsenkungen 18 nicht nur punktuell kreisflächige Geometrien, sondern auch etwa dekorative oder informative kanalartige Verläufe mit quer zur Faserebene orientierten Seitenwänden aufweisen. Örtlich stattdessen geneigte oder im Querschnitt geschwungen verlaufende Seitenwände, die problemlos durch entsprechende Fräskopfgeometrien oder durch rückseitige Einprägungen in das insbesondere thermoplastische Laminat 14 der Matrix erzeugbar sind, führen lokal gezielt zu weniger kontrastreich begrenzter Durchstrahlung. In Einzelfällen kann es auch zweckmäßig sein, die örtlich von der Materialstärke abhängige Intensität der Durchstrahlung des Faserverbundwerkstoffes durch ihm rückwärtig, insbesondere im Spritzguss, aufgebrachte Strukturen zu modifizieren.

Bei einem derart vorbereiteten und etwa als ebene Tafel oder in gewölbter Freiform aufgestellten Bauteil reicht schon rückwärtig zugängliche Umgebungshelligkeit, um die Geometrien etwa rückwärtiger Aussparungen 17 oder Einsenkungen 18 sichtseitig als Abstrahlbereiche 16 durchschimmern zu lassen. Besonders prägnant treten Abstrahlbereiche 16 jedoch in Erscheinung, die, zumal selektiv etwa hinsichtlich Farbigkeit und Intensität, von wenigstens einer Lichtquelle 19 wie einer lichtemittierenden Halbleiterdiode (LED) hinterstrahlt werden. Zweckmäßigerweise sind dazu hinter dem Faserverbundwerkstoff 11 den Aussparungen 17 beziehungsweise Einsenkungen 18 zugeordnete Lichtkammern 20 gegeneinander abgeschottet, um die einzelnen Abstrahlbereiche 16 ohne wechselseitige Überstrahlung unabhängig voneinander ansteuern zu können.

Ein so ausgestatteter Faserverbundwerkstoff 11 kann als Gehäusewand etwa eines batteriebetriebenen, portablen elektronischen Gerätes Einsatz finden und dadurch, im eigentlich nur mechanisch stabilisierenden und schützenden Bauteil, nun auch unmittelbar Anzeigefunktionen übernehmen.

Stattdessen oder zusätzlich kann das Bauteil wie eingangs schon erörtert auch für Schalterfunktionen ausgelegt sein. Dafür ist im in der Zeichnung skizzierten Ausführungsbeispiel in eine Einsenkung 18 eine lichtdurchlässige Elektrode 21 eingesetzt und an eine Auswerteschaltung 22 angeschlossen, die etwa anspricht und eine anderweitige Funktion auslöst, wenn sich eine Bedienperson mit einer Fingerkuppe dem lokal zugeordneten, nun als Aktionsbereich dienenden Abstrahlbereich 16 hinreichend annähert. Zu solcher Betätigung kann durch Aufleuchten des Abstrahlbereiches 16 infolge Ansteuerns der zugeordneten Lichtquelle 19 etwa aus der Auswerteschaltung 22 aufgefordert werden; oder zum Quittieren der Funktionsauslösung wird die Abstrahlung von der Lichtquelle 19 umgesteuert, etwa in ihrer Intensität und / oder Farbabstrahlung und / oder Abstrahlperiode modifiziert.

Ein Bauteil mit Faserverbundwerkstoff 11 wie etwa das so genannte Organoblech weist also erfindungsgemäß, bei sichtseitigen Abstrahlbereichen 16 diesen regelmäßig axial zugeordnet aber nicht unbedingt damit geometrisch deckungsgleich, rückwärtig wenigstens eine Aussparung 17 in einer lichtundurchlässigen Beschichtung 15 oder / und wenigstens eine in das Laminat 14 der Matrix des Faserverbundwerkstoffes 11 etwa eingefräste oder eingeformte Einsenkung 18 auf. Solche Einsenkungen 18 können lokal unterschiedlich abgeschrägte Seitenberandungen (Wände) und auch kanalartige Verläufe aufweisen. Zum Darbieten von Dekoren oder Informationen mittels wenigstens einer möglichst intensitäts-, takt- oder farbumsteuerbaren Lichtquelle 19 aus einer abgeschotteten Lichtkammer 20 heraus werden die Einsenkungen 18 hinterleuchtet. Die Lichtquellen 19 können an die Auswerteschaltung 22 für wenigstens eine Kapazität mit einer lichtdurchlässigen Elektrode 21 angeschlossen sein, die hinter einem Abstrahlbereich 16 angeordnet und vorzugsweise in eine Einsenkung 18 in das rückwärtige Laminat 14 eingelassen ist, um Schaltungsfunktionen etwa durch Annähern einer Fingerkuppe an den zugeordneten Abstrahlbereich 16 auszulösen. So lassen sich in, originär nur mechanische Schutzfunktionen erfüllende, Gehäuseteile aus Faserverbundwerkstoff 11 nun Nutzfunktionen integrieren, die bisher den logistischen und fertigungstechnischen Zusatzaufwand für individuell in Gehäuseschalen zu montierende Informations- und Funktionselemente wie Anzeigen und Schalter bedingten.

### Bezugszeichenliste

- 11: Faserverbundwerkstoff (mit 12 in Matrix aus 13/14)
- 12: Faserlage (zwischen 13/14)
- 13: vorderes Laminat (der Matrix von 11)
- 14: rückwärtiges Laminat (der Matrix von 11)
- 15: lichtundurchlässige rückwärtige Beschichtung (hinter 14)
- 16: Abstrahlbereich (sichtseitig vor 13)
- 17: Aussparung (in 15)
- 18: Einsenkung (in 14)
- 19: Lichtquelle (hinter 17, 18 in 20)
- 20: Lichtkammern (hinter 17, 18)
- 21: Elektrode (in 18, an 22)
- 22: Auswerteschaltung (für Kapazität mit 21)
- 23: Raubeschichtung (auf 13)

## Patentansprüche

1. Bauteil mit wenigstens einer Faserlage (12) zwischen vorderen und rückwärtigen Laminaten (13, 14) und mit wenigstens einer Einsenkung (18) im rückwärtigen Laminat (14), die sich maximal bis etwa in die Ebene der Faserlage (12) erstreckt, bei lokal ausgesparter lichtundurchlässiger Beschichtung (15) auf dem rückwärtigen Laminat (14) hinter axial zugeordneten, sichtseitigen Abstrahlbereichen (16) vor dem vorderen Laminat (13).

2. Bauteil nach dem vorangehenden Anspruch, **dadurch gekennzeichnet, dass** die Faserlage (12) von der Einsenkung (18) nicht angegriffen ist.

3. Bauteil nach einem der vorangehenden Ansprüche, **dadurch gekennzeichnet, dass** die Tiefe der Einsenkung (18) dafür ausgelegt ist, sichtseitig die Struktur der Faserlage (12) durchschimmern zu lassen.

4. Bauteil nach einem der vorangehenden Ansprüche, **dadurch gekennzeichnet, dass** Einsenkungen (18) statt quer zur Faserebene orientierte Berandungen dagegen geneigte oder im Querschnitt geschwungen verlaufende Seitenwände aufweisen.

5. Bauteil nach einem der vorangehenden Ansprüche, **dadurch gekennzeichnet, dass** die von der lokalen Materialstärke abhängige Durchstrahlung des Faserverbundwerkstoffes (11) durch ihm rückwärtig aufgebrachte Strukturen modifiziert ist.

6. Bauteil nach einem der vorangehenden Ansprüche, **dadurch gekennzeichnet, dass** die rückwärtige Einsenkung (18) einen kanalartigen Verlauf aufweist.

7. Bauteil nach einem der vorangehenden Ansprüche, **dadurch gekennzeichnet, dass** Aussparungen (17) in Beschichtungen (15) auf dem rückwärtigen Laminat (14) in Zuordnung zu Abstrahlbereichen (16) vorgesehen sind.

8. Bauteil nach einem der vorangehenden Ansprüche, **dadurch gekennzeichnet, dass** es von wenigstens einer Lichtquelle (19) hinterleuchtet ist.

9. Bauteil nach dem vorangehenden Anspruch, **dadurch gekennzeichnet, dass** die Lichtquelle (19) farb-, intensitäts- und / oder taktumsteuerbar ist.

10. Bauteil nach einem der drei vorangehenden Ansprüche, **dadurch gekennzeichnet, dass** Lichtquellen (19) in gegeneinander abgeschotteten Lichtkammern (20) hinter Aussparungen (17) und / oder hinter Einsenkungen (18) angeordnet sind.

11. Bauteil nach einem der vorangehenden Ansprüche, **dadurch gekennzeichnet, dass** hinter wenigstens einem Abstrahlbereich (16) bei einer Aussparung (17) oder bei einer Einsenkung (18) eine an eine Auswerteschaltung (22) angeschlossene Elektrode (21) angeordnet ist.

12. Bauteil nach dem vorangehenden Anspruch, **dadurch gekennzeichnet, dass** die Elektrode (21) am Grund einer Einsenkung (18) angeordnet ist.

13. Bauteil nach einem der beiden vorangehenden Ansprüche, **dadurch gekennzeichnet, dass** die Elektrode (21) lichtdurchlässig ist.

14. Bauteil nach einem der drei vorangehenden Ansprüche, **dadurch gekennzeichnet, dass** an die Auswerteschaltung (22) auch eine Lichtquelle (19) angeschlossen ist.

15. Bauteil nach einem der vorangehenden Ansprüche, **dadurch gekennzeichnet, dass** eine Raubeschichtung (23) auf dem vorderen Laminat (13) in Abstrahlbereichen (16) unterbrochen ist.
